# EUROPÄISCHE PATENTSCHRIFT

(11) **EP 0 709 555 B1**
(45) Veröffentlichungstag und Bekanntmachung des Hinweises auf die Patenterteilung: **08.09.1999**
(21) Anmeldenummer: 95115757.7
(22) Anmeldetag: 06.10.1995
(51) Int. Cl.: F01N 1/02, F01N 3/28, F01N 7/08

(54) **Schalldämpfer, insbesondere Resonator-Schalldämpfer, Katalysator od. dergl.**
Silencer, in particular resonator silencer, catalyst or the like
Silencieux, en particulier silencieux à résonateur, catalyseur ou similaire

(30) Priorität: 27.10.1994 DE 9417244 U
(43) Veröffentlichungstag der Anmeldung: 01.05.1996
(73) Patentinhaber: J. Eberspächer GmbH & Co., 73730 Esslingen (DE)
(72) Erfinder: Neu, Helmut, D-66564 Ottweiler (DE)

(56) Entgegenhaltungen:
- EP-A- 0 425 983
- US-A- 3 953 176
- US-A- 4 969 264
- US-A- 5 293 743
- PATENT ABSTRACTS OF JAPAN vol. 14 no. 582 (C-792) ,26.Dezember 1990 & JP-A-02 253852 (NIPPON STEEL) 12.Oktober 1990,
- PATENT ABSTRACTS OF JAPAN vol. 5 no. 10 (M-51) ,22.Januar 1981 & JP-A-55 142921 (NGK SPARK PLUG CO LTD) 7.November 1980,

## Beschreibung

Die Erfindung betrifft eine Abgasanordnung in einem Kraftfahrzeug zum Hindurchströmen von Abgasen, mit einem Außengehäuse mit einem Einströmbereich und einem Ausströmbereich, zwischen denen sich ein rohrförmiger mittlerer Gehäusebereich mit senkrecht zur Hauptdurchströmungsrichtung größerem Querschnitt als die äußeren Endquerschnitte von Ein- und Ausströmbereich befindet, wobei der Einströmbereich, der mittlere Gehäusebereich und der Ausströmbereich des Außengehäuses einstückig ausgebildet sind und der Ein- und der Ausströmbereich gegenüber dem mittleren Gehäusebereich eingezogen sind, und innerhalb des mittleren Gehäusebereichs wenigstens ein Einbauteil angeordnet ist, das sich senkrecht zur Hauptdurchströmungsrichtung über die lichten Querschnitte von Ein- und Ausströmbereich hinaus bis zur Wandung des mittleren Gehäusebereichs erstreckt.

Eine vorgenannte, aus EP-A-0 425 983 bekannte Abgasanordnung ist ein Katalysator, wobei das Einbauteil ein keramisches Substrat, insbesondere ein Monolith, ist. Der Monolith ist ein zylindrisches Bauteil mit kreisförmigem Querschnitt oder ein Einbauteil mit Ovalquerschnitt. Ein oder mehrere derartige Monolithen können hierbei in einem rohrförmigen Mantel eingefaßt sein, wobei die beiden Axialenden des Mantels eingezogen sind. Dadurch werden der oder die Monolithe bleibend im Mantel bzw. Gehäuse befestigt. Die geringfügig eingezogenen Axialenden des Gehäuses besorgen eine Axialfixierung des Monoliths im Gehäuse. Distanzringe zwischen Monolithen können vorgesehen sein. Die Monolithe selbst können in einer Matte im Gehäuse gewickelt sein.

Aufgabe der Erfindung ist die Schaffung einer eingangs genannten Abgasanordnung, welche bei einfachem Aufbau und einfacher Fertigung außerhalb des Katalysatorbereichs Verwendung findet.

Gelöst wird die der Erfindung zugrundeliegende Aufgabe durch eine Abgasanordnung mit den im Anspruch 1 angegebenen Merkmalen.

Vorteilhaft weitergebildet wird der Erfindungsgegenstand durch die Merkmale der Ansprüche 2 bis 5.

Die Erfindung kennzeichnet sich also dadurch, daß die Abgasanordnung ein Resonator-Schalldämpfer ist. Das Einbauteil ist hierbei ein Innentrichter, der an der Innenwandung des mittleren Gehäuseteils anliegend befestigt ist, beispielsweise durch Punktschweißung.

Bei einem durch offenkundige Vorbenutzung bekannten Resonator-Schalldämpfer ist das Außengehäuse aus einem separaten mittleren Gehäusebereich (sog. Mantel) sowie je einem separaten Einströmbereich und Ausströmbereich (sog. Hutzen) gebildet. Das Außengehäuse ist somit aus drei Einzelteilen zusammengesetzt, wobei Einströmbereich und Ausströmbereich untereinander gleich ausgebildet sind. Nach dem Einsetzen des Innentrichters in den mittleren Gehäusebereich werden gleichfalls Einströmbereich und Ausströmbereich um ein gewisses Maß in den mittleren Gehäusebereich eingesteckt. Bei dem bekannten Resonator-Schalldämpfer ist der mittlere Gehäusebereich im Querschnitt kreisförmig ausgebildet. Entsprechend sind Einströmbereich und Ausströmbereich, allerdings nur jeweils an ihren Enden über eine gewisse axiale Strecke im Querschnitt kreisförmig ausgebildet. Hierbei sind die außenliegenden endständigen Kreisflächen von Einströmbererich und Ausströmbereich gegenüber deren innenliegenden endständigen Kreisflächen exzentrisch angeordnet, so daß zum Erhalt eines äußerlich axial symmetrischen Schalldämpfers die beiden den Einströmbereich und Ausströmbereich bildenden Hutzen umfangsmäßig in eine übereinstimmende Winkelstellung gedreht werden müssen. Im übrigen werden insbesondere die Einzelteile des Außengehäuses des bekannten Schalldämpfers umfangsmäßig miteinander verschweißt. Bei dem bekannten Resonator-Schalldämpfer ist es vor allem von Nachteil, daß die Herstellung des Schalldämpfers relativ aufwendig ist, da eine größere Anzahl von Einzelteilen zu fertigen, zu positionieren und zu fixieren ist. Weiterhin hat der bekannte Schalldämpfer auch einen größeren Raumbedarf infolge der erforderlichen Umfangsschweißnähte, was bei den beengten Raumverhältnissen, insbesondere bei Kraftfahrzeugen besonders nachteilig ist. Im übrigen kam es - trotz des Vorsehens einer entsprechenden Beschriftung für die Herstellung - angesichts der äußerlich axial symmetrischen Ausbildung des Schalldämpfers bei dessen Herstellung immer wieder vor, daß entweder der Innentrichter in den mittleren Gehäusebereich falsch eingeschoben wurde oder der gesamte Resonator-Schalldämpfer in die ihn aufnehmende Abgasanlage falsch eingebaut wurde.

Beim erfindungsgemäßen Gegenstand sind die Endbereiche des ursprünglich aus einem durchgehenden Rohr bestehenden Außengehäuses bei in dem mittleren Gehäusebereich eingesetzten Innenteil zur Bildung von Einströmbereich und Ausströmbereich, vorzugsweise mittels eines mehrstufigen hydraulischen Preßwerkzeugs, gegenüber dem mittleren Gehäusebereich eingezogen. Eine bevorzugte Ausbildung ist gekennzeichnet durch einen vor dem Einsetzen des Innenteils entsprechend dessen Außenabmessungen aufgeweiteten mittleren Gehäusebereich. Im übrigen sind mit Vorteil die Eintrittsöffnung des Einströmbereichs und die Austrittsöffnung des Ausströmbereichs unterschiedlich ausgebildet, insbesondere weisen sie unterschiedliche Durchmesser auf.

Die Erfindung löst die gestellte Aufgabe mit besonders einfachen Mitteln. Da insbesondere für das Außengehäuse nur ein einziges Einzelteil erforderlich ist, ergeben sich bei erhöhter Fertigungssicherheit beträchtliche Kostenreduzierungen bei der gesamten Herstellung. Vor allem handelt es sich bei dem erfindungsgemäß anwendbaren (kalten) Einziehen von Einströmbereich und Ausströmbereich um ein äußerst preisgünstiges Herstellverfahren. Hierbei ergeben sich auch relativ geringe Werkzeugkosten, zumal durch die Erfindung nur eine geringe Anzahl von Einzelteilen zu positionieren ist und somit weniger Verfahrensschritte erforderlich sind. Mittels des bevorzugt verwendbaren mehrstufigen hydraulischen Preßwerkzeugs kann in einer Stufe auch das Aufweiten des mittleren Gehäusebereichs für das Einsetzen des Innenteils in diesen verwendet werden. Im Gegensatz zu dem bekannten Resonator-Schalldämpfer, bei welchem es schwierig war, die asymmetrisch ausgebildeten Hutzen in ausreichend genauem Maße "auf Reihe zu bringen", ergeben sich bei der besonders einfachen einteiligen Ausbildung des Außengehäuses nach der Erfindung automatengerechte Anschlußmaße für die Fertigung. Infolge des Wegfalls van Umfangsschweißnähten bei der Erfindung ermöglicht diese auch eine merkliche Durchmesserreduzierung und somit eine Reduzierung des nötigen Einbauraums. Schließlich ist bei dem erfindungsgemäßen Resonator-Schalldämpfer ein falsches Einsetzen des Innenteils oder ein falscher Einbau des gesamten Schalldämpfers in die Abgasanlage auf besonders einfache Weise vermeidbar durch die unterschiedliche Ausbildung von Eintrittsöffnung des Einströmbereichs und Austrittsöffnung des Ausströmbereichs.

Gemäß einer Weiterbildung der Erfindung ist die erfindungsgemäße Vorrichtung in Richtung senkrecht zur Hauptdurchströmungsrichtung, insbesondere von einem zylindrischen auf einen ovalen Querschnitt, zusammenpreßbar. Hierdurch ergibt sich eine ganz besonders kompakte und somit eine eine weiter erhöhte Bodenfreiheit ermöglichende Ausbildung der Vorrichtung nach der Erfindung.

Ferner ergibt sich noch eine Weiterbildung der Erfindung dadurch, daß die Enden von Ein- und Ausströmbereich mit den Enden jeweils benachbarter Anschlußrohre unter Zwischenschaltung von endständigen, vorzugsweise kugelförmigen, Aufweitungen dieser verbindbar sind. Derartige Aufweitungen der Anschlußrohre können auf einfache Weise größere Unterschiede zwischen den Anschlußmaßen von Ein- und Ausströmbereich einerseits sowie den benachbarten Anschlußrohren andererseits überbrücken.

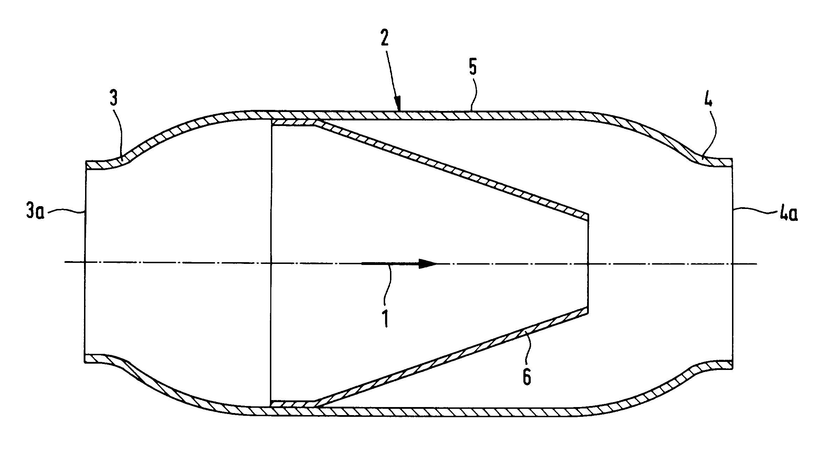

Weitere Merkmale und Vorteile der Erfindung ergeben sich aus der nachfolgenden Beschreibung eines in der Zeichnung schematisch dargestellten Ausführungsbeispiels.

Die Zeichnung zeigt in einem axialen Längsschnitt einen Resonator-Schalldämpfer zum Hindurchströmen von Abgasen, wobei die Hauptdurchströmungsrichtung durch einen Pfeil 1 veranschaulicht ist. Der Schalldämpfer weist ein Außengehäuse 2 mit einem Einströmbereich 3 und einem Ausströmbereich 4 auf, zwischen denen sich ein rohrförmiger mittlerer Gehäusebereich 5 mit senkrecht zur Hauptdurchströmungsrichtung (Pfeil 1) größerem Querschnitt als die äußeren Endquerschnitte von Einströmbereich 3 und Ausströmbereich 4 befindet. Innerhalb des mittleren Gehäusebereichs 5 ist ein Innentrichter 6 angeordnet, der sich in Richtung senkrecht zur Hauptdurchströmungsrichtung (Pfeil 1) über die lichten Querschnitte von Einströmbereich 3 und Ausströmbereich 4 hinaus bis zur Wandung des mittleren Gehäusebereichs 5 erstreckt. Beim Hindurchströmen der Abgase durch den dargestellten Resonator-Schalldämpfer in Hauptdurchströmungsrichtung gemäß Pfeil 1 erfolgt in an sich bekannter Funktionsweise eine Schallreduzierung.

Wie aus der Zeichnung ersichtlich, sind der mittlere Gehäusebereich 5, der Einströmbereich 3 und der Ausströmbereich 4 des Außengehäuses 2 erfindungsgemäß einstückig ausgebildet. Hierzu sind die Endbereiche des ursprünglich aus einem durchgehenden Rohr bestehenden Außengehäuses 2 bei in dem mittleren Gehäusebereich 5 eingesetzten Innentrichter 6 zur Bildung von Einströmbereich 3 und Ausströmbereich 4 mittels eines mehrstufigen hydraulischen Preßwerkzeugs gegenüber dem mittleren Gehäusebereich 5 eingezogen. Vor dem Einsetzen des Innentrichters 6 in den mittleren Gehäusebereich 5 wird dieser entsprechend dem äußeren Durchmesser des Innentrichters 6 aufgeweitet. Das Einziehen der Endbereiche des Außengehäuses 2 zur Bildung von Einströmbereich 3 und Ausströmbereich 4 erfolgt in der Weise, daß die Eintrittsöffnung 3a des Einströmbereichs 3 und die Austrittsöffnung 4a des Ausströmbereichs 4 unterschiedliche Durchmesser aufweisen.

Die zeichnerisch dargestellte und vorstehend umrissene Ausbildung der Erfindung ermöglicht mit einfachen Mitteln u.a. auch, daß weder der Innentrichter 6 in das Außengehäuse 2 falsch eingeschoben werden kann noch der gesamte Resonanz-Schalldämpfer in die ihn aufnehmenden Anschlußleitungen falsch eingebaut werden kann.

Lediglich zwecks nochmals besserer Veranschaulichung der Erfindung seien nachfolgend die wesentlichen Schritte bei der Herstellung des Resonanz-Schalldämpfers nach der Erfindung mittels eines bevorzugt verwendeten dreistufigen hydraulischen Preßwerkzeugs aufgeführt:

In einem ersten Schritt wird ein für die Bildung des Außengehäuses 2 vorgesehenes zylindrisches Rohr in seinem einen Endbereich zur Bildung des Ausströmbereichs 4 auf Nennmaß der Austrittsöffnung 4a eingezogen, und die verbleibende gerade Rohrstrecke wird auf Nennmaß passend zum Außendurchmesser des Innentrichters 6 aufgeweitet.
In einem zweiten Schritt wird der Innentrichter 6 in den so gebildeten mittleren Gehäusebereich 5 eingeschoben, und das andere Rohrende wird voreingezogen, wonach der Innentrichter 6 fixiert wird, beispielsweise durch Punktschweißen od. dergl.
In einem dritten Schritt wird das im zweiten Schritt voreingezogene Rohrende zur Bildung des Einströmbereichs 3 auf Nennmaß der Eintrittsöffnung 3a fertigeingezogen, wonach der Resonanz-Schalldämpfer praktisch fertiggestellt ist.
Der Vollständigkeit halber sei noch erwähnt, daß in einem geeigneten Stadium, zweckmäßigerweise nach dem ersten Schritt, eine Beschriftung des Außengehäuses vor allem auch zur Kenntlichmachung der Durchströmungsrichtung erfolgen kann.

Für den Fall, daß der so fertiggestellte Resonanz-Schalldämpfer in der bereits weiter oben beschriebenen Weise von seinem zylindrischen beispielsweise auf einen in vertikaler Richtung kompakteren ovalen Querschnitt zusammengepreßt werden soll, ist es grundsätzlich denkbar, daß dies als weiterer Schritt in einer zusätzlichen Stufe des hydraulischen Preßwerkzeugs erfolgt.

Vollständigkeitshalber wird noch erwähnt, daß die äußeren Enden von Einströmbereich 3 und Ausströmbereich 4 mit den Enden jeweils benachbarter (in der Zeichnung nicht dargestellter) Anschlußrohre auf geeignete Weise, beispielsweise durch Schweißen, verbunden werden. Für den Fall größerer Durchmesserunterschiede zwischen den Enden von Einströmbereich 3 bzw. Ausströmbereich 4 einerseits und den Anschlußrohren andererseits könnten diese Unterschiede durch kugelförmige Aufweitungen der Anschlußrohre überbrückt werden.

## Patentansprüche

1. Abgasanordnung in einem Kraftfahrzeug zum Hindurchströmen von Abgasen, mit einem Außengehäuse (2) mit einem Einströmbereich (3) und einem Ausströmbereich (4), zwischen denen sich ein rohrförmiger mittlerer Gehäusebereich (5) mit senkrecht zur Hauptdurchströmungsrichtung (1) größerem Querschnitt als die äußeren Endquerschnitte von Ein- (3) und Ausströmbereich (4) befindet, wobei der Einströmbereich (3), der mittlere Gehäusebereich (5) und der Ausströmbereich (4) des Außengehäuses (2) einstückig ausgebildet sind und der Ein- (3) und der Ausströmbereich (4) gegenüber dem mittleren Gehäusebereich (5) eingezogen sind, und innerhalb des mittleren Gehäusebereichs (5) wenigstens ein Einbauteil angeordnet ist, das sich senkrecht zur Hauptdurchströmungsrichtung (1) über die lichten Querschnitte von Ein- (3) und Ausströmbereich (4) hinaus bis zur Wandung des mittleren Gehäusebereichs (5) erstreckt,
dadurch gekennzeichnet,
daß die Abgasanordnung ein Resonator-Schalldämpfer ist, wobei das Einbauteil ein Innentrichter ist.

2. Anordnung nach Anspruch 1, gekennzeichnet durch einen vor dem Einsetzen des Innenteils (6) entsprechend dessen Außenabmessungen aufgeweiteten mittleren Gehäusebereich (5).

3. Anordnung nach Anspruch 1 oder 2, dadurch gekennzeichnet, daß die Eintrittsöffnung (3a) des Einströmbereichs (3) und die Austrittsöffnung (4a) des Ausströmbereichs (4) unterschiedlich ausgebildet sind, insbesondere unterschiedliche Durchmesser aufweisen.

4. Anordnung nach einem der Ansprüche 1 bis 3, dadurch gekennzeichnet, daß sie in Richtung senkrecht zur Hauptdurchströmungsrichtung (Pfeil 1), insbesondere von einem zylindrischen auf einen ovalen Querschnitt, zusammenpreßbar ist.

5. Anordnung nach einem der Ansprüche 1 bis 4, dadurch gekennzeichnet, daß die Enden von Ein- (3) und Ausströmbereich (4) mit den Enden jeweils benachbarter Anschlußrohre, gegebenenfalls unter Zwischenschaltung von endständigen, vorzugsweise kugelförmiger, Aufweitungen dieser, verbindbar sind.

## Claims

1. Exhaust-gas arrangement in a motor vehicle for the throughflow of exhaust gases, having an outer casing (2) with an inflow region (3) and an outflow region (4), between which a tubular centre casing region (5) having a cross section which is greater perpendicularly to the main throughflow direction (1) than the outer end cross sections of inflow region (3) and outflow region (4) is located, the inflow region (3), the centre casing region (5) and the outflow region (4) of the outer casing (2) being designed in one piece, and the inflow region (3) and the outflow region (4) being drawn in relative to the centre casing region (5), and at least one built-in component being arranged inside the centre casing region (5), this built-in component extending perpendicularly to the main throughflow direction (1) beyond the clear cross sections of inflow region (3) and outflow region (4) up to the wall of the centre casing region (5), characterized in that the exhaust-gas arrangement is a resonator silencer, the built-in component being an inner funnel.

2. Arrangement according to Claim 1, characterized by a centre casing region (5) widened in accordance with the external dimensions of the inner part (6) before the insertion of the latter.

3. Arrangement according to Claim 1 or 2, characterized in that the inlet opening (3a) of the inflow region (3) and the outlet opening (4a) of the outflow region (4) are of different design, in particular they have different diameters.

4. Arrangement according to one of Claims 1 to 3, characterized in that it can be compressed perpendicularly to the main throughflow direction (arrow 1), in particular from a cylindrical to an oval cross section.

5. Arrangement according to one of Claims 1 to 4, characterized in that the ends of inflow region (3) and outflow region (4) can be connected to the ends of in each case adjacent connecting pipes, if need be with terminal, preferably spherical, widened portions of the latter in between.

## Revendications

1. Dispositif d'échappement dans un véhicule automobile, pour y faire passer les gaz d'échappement, comprenant un carter extérieur (2) avec une région d'admission (3) et une région d'évacuation (4), entre lesquelles se trouve une région médiane (5) tubulaire de carter dont la section perpendiculairement à la direction principale d'écoulement (1) est plus grande que les sections terminales extérieures de la région d'admission (3) et de la région d'évacuation (4), la région d'admission (3), la région médiane (5) de carter et la région d'évacuation (4) du carter extérieur (2) étant réalisées d'un seul tenant et la région d'admission (3) et la région d'évacuation (4) étant renfoncées par rapport à la région médiane (5) de carter, et au moins une pièce d'insertion étant disposée à l'intérieur de la région médiane (5) de carter, pièce qui s'étend, perpendiculairement à la direction principale d'écoulement (1), au-delà des sections de passage de la région d'admission (3) et de la région d'évacuation (4) jusqu'à la paroi de la région médiane (5) de carter,
**caractérisé** en ce que le dispositif d'échappement est un silencieux à résonateur, la pièce d'insertion étant un entonnoir intérieur.

2. Dispositif d'échappement selon la revendication 1, **caractérisé** en ce que la région médiane (5) de carter est, avant l'insertion de la pièce intérieure (6), élargie conformément aux dimensions extérieures de cette pièce.

3. Dispositif d'échappement selon la revendication 1 ou 2, **caractérisé** en ce que l'ouverture d'entrée (3a) de la région d'admission (3) et l'ouverture de sortie (4a) de la région d'évacuation (4) sont de configurations différentes, notamment présentent des diamètres différents.

4. Dispositif d'échappement selon une des revendications 1 à 3, **caractérisé** en ce qu'il peut être comprimé en direction perpendiculaire à la direction principale d'écoulement (flèche 1), notamment d'une section cylindrique à une section ovale.

5. Dispositif d'échappement selon une des revendications 1 à 4, **caractérisé** en ce que les extrémités de la région d'admission (3) et de la région d'évacuation (4) peuvent être assemblées aux extrémités de tuyaux de raccordement voisins respectifs, éventuellement avec intercalation d'élargissements terminaux, de préférence sphériques, de ces tuyaux.
